# EUROPÄISCHE PATENTANMELDUNG

(11) **EP 2 698 279 A1**
(43) Veröffentlichungstag der Anmeldung: **19.02.2014**
(21) Anmeldenummer: 13002681.8
(22) Anmeldetag: 23.05.2013
(51) Int. Cl.: B60P 3/14, B60P 3/36

(54) **Campingfahrzeug-Einbaumöbel**

(30) Priorität: 13.08.2012 DE 102012015953
(71) Anmelder: Hymer AG, 88339 Bad Waldsee (DE)
(72) Erfinder: Neubrand, Thomas, 88339 Bad Waldsee/ Mennisweiler (DE)
(74) Vertreter: Otten, Roth, Dobler & Partner

(57) **Zusammenfassung**

Die Erfindung betrifft Campingfahrzeug-Einbaumöbel für Camping- oder Freizeitfahrzeuge, wobei das Einbaumöbel als Oberschrank (4) ausgebildet ist und einen Möbelkorpus sowie Befestigungsmittel des Möbelkorpus an einer Wand eines Camping- oder Freizeitfahrzeugs oder an einem benachbarten Möbelkorpus umfasst. Hierbei sind Mittel (20) zur Absenkung und anschließenden Anhebung des Oberschranks von einer ersten oberen Position (I) in eine zweite untere Position (II) vorgesehen.

## Beschreibung

Die Erfindung betrifft ein Campingfahrzeug-Einbaumöbel für Camping- oder Freizeitfahrzeuge nach dem Oberbegriff des Anspruchs 1.

Camping- oder Freizeitfahrzeuge erfreuen sich großer Beliebtheit. Problematisch bei derartigen Fahrzeugen ist oftmals, dass deren Inneneinbauten unter der Anforderung einer extremen Platzoptimierungen und somit die zur Verfügung stehenden Einbauräume optimal ausgenutzt werden müssen. Der Möbelbau im Bereich der Camping- oder Freizeitfahrzeuge ist hierauf extrem spezialisiert, da einerseits leichte Bauweisen unter Berücksichtigung des Gesamtgewichts und andererseits hohe Funktionalität in Hinblick auf den Stauraum gefordert sind. Aus dem Stand der Technik ist es daher bekannt, Oberschränke, insbesondere im Bereich der Außenwände eines Camping- oder Freizeitfahrzeugs anzubringen, wobei vorzugsweise bei Küchenzeilen oder im Schlafbereich diese Schränke eine wesentliche Stauraumfunktion erfüllen.

Nutzen nun behinderte Menschen, insbesondere Rollstuhlfahrer derartige Camping- oder Freizeitfahrzeuge, so stellt sich oftmals das Problem, dass der Stauraum im Bereich der Oberschränke nur beschränkt nutzbar ist, weil dieser außerhalb eines Zugriffsbereichs des Rollstuhlfahrers liegt.

Die Erfindung hat sich daher die Aufgabe gestellt, den Stauraum innerhalb eines Camping- oder Freizeitfahrzeuges für behinderte Menschen besser nutzbar, insbesondere besser zugänglich zu gestalten.

Diese Aufgabe wird ausgehend vom Oberbegriff des Patentanspruchs 1 durch ein Campingfahrzeug-Einbaumöbel nach den kennzeichnenden Merkmalen des Anspruchs 1 gelöst.

Vorteilhafte Weiterbildungen sowie zweckmäßige Ausgestaltungen sind in den abhängigen Ansprüchen angegeben.

Die Erfindung betrifft ein Campingfahrzeug-Einbaumöbel für Camping- oder Freizeitfahrzeuge, wobei das Einbaumöbel als Oberschrank ausgebildet ist und einen Möbelkorpus sowie Befestigungsmittel zur Befestigung des Möbelkorpus an einer Wand des Camping- oder Freizeitfahrzeugs oder an einen benachbarten Möbelkorpus umfasst. Die Erfindung ist dadurch gekennzeichnet, das Mittel zur Absenkung und anschließenden Anhebung des Oberschranks von einer ersten oberen Position in eine zweite untere Position vorgesehen sind.

Die Mittel zur Absenkung und anschließenden Anhebung des Oberschranks bieten die Möglichkeit, behinderten Menschen den Schrank auf eine ihnen zugängliche Arbeitsebene abzusenken, und ihn später, beispielsweise zur erneuten Freigabe dieser Arbeitsebene für weitere Arbeitsschritte, wieder anzuheben.

In einer vorteilhaften Weiterbildung ist vorgesehen, dass die erste obere Position als Transportposition und die zweite untere Position als Zugriffsposition ausgebildet ist, wobei insbesondere in der ersten oberen Transportposition Mittel zur Arretierung und Sicherung des Einbaumöbels während des Transports vorgesehen sind.

Durch die Ausbildung einer oberen ersten Transportposition und einer unteren zweiten Zugriffposition ist ermöglicht, dass ein entsprechend absenkbares Möbel auch vor einem Fenster oder über einer Arbeitsfläche angeordnet werden kann, und trotzdem in der oberen Position bzw. während des Transports der gut gesicherte und optisch ansprechende Gesamteindruck eines möblierten Camping- oder Freizeitfahrzeugs entsteht. Durch das Vorsehen von Mitteln zur Arretierung und Sicherung des Einbaumöbels während des Transports ist sichergestellt, dass die Mittel zur Absenkung und anschließenden Anhebung bei Erschütterungen, beispielsweise bei Fahrten über Bodenwellen oder durch unwegsames Gelände, nicht versehentlich ausgelöst werden, wodurch ein unbeabsichtigtes absenken des Oberschranks erfolgen könnte.

In einer weiteren zweckmäßigen Ausgestaltung ist über dies vorgesehen, dass eine Bewegungskurve des Einbaumöbels von der oberen ersten Position zur zweiten unteren Position, als ausschließlich diagonale Linearbewegung ausgebildet ist.

Durch die Bewegung des Einbaumöbels entlang einer Diagonalen wird erreicht, dass das Möbel sich nicht nur auf die Arbeitsebene eines beispielsweise behinderten im Rollstuhl sitzenden Menschen zu bewegt, sondern auch noch auf diesen selbst zu, wenn beispielsweise zwischen der Wand und dem bedienenden Menschen in der Küche eine Arbeitsfläche angeordnet ist. Auf diese Weise wird eine verbesserte Erreichbarkeit des Inhalts des Oberschranks erzielt.

Weitere zweckmäßige Ausgestaltungen sehen vor, dass die Mittel zur Absenkung beispielsweise durch Linearauszüge gebildet sind, welche vorzugsweise telekopierbar ausgeführt sind. Darüber hinaus sehen zweckmäßige Ausgestaltungen vor, dass mindestens ein Antrieb zur automatischen Absenkung und Anhebung des Oberschranks ausgebildet wird.

Teleskopierbare Linearauszüge bieten auch bei baulicherseits schmalen Schränken die Möglichkeit, eine weitgehende Absenkung bis hin zur guten Erreichbarkeit über einer Arbeitsebene bereitzustellen. Auch das Vorsehen eines Antriebs, beispielsweise eines Seilzuges mit einer Seilwinde, insbesondere unter Einsatz einer Umlenkung, oder andersartige Antriebe sind vorteilhaft, da dadurch eine einfache Knopfbetätigung der Absenkung und Anhebung des Oberschranks erfolgen kann. Dies erleichtert den bedienenden Menschen weiterhin den Zugriff auf die im Möbel untergebrachten Gegenstände.

In überdies zweckmäßigen Ausführungsformen kann weiterhin der Innenbereich des Einbaumöbels ebenfalls ausfahrbar, insbesondere telekopierbar sein, um auch die hinteren Ebenen eines Schranks besser zugänglich zu machen.

Eine zweckmäßige Ausgestaltung sieht weiterhin vor, das Einbaumöbel mit einer elektronischen Positionsüberwachung und/oder einer automatischen Positionseinnahme auszubilden, sodass beispielweise durch Betätigung einer Rückstellfunktion sämtliche im Camping- oder Freizeitfahrzeug angeordneten Möbel in ihre obere Transportposition überführt werden können, um dann möglicherweise manuelle betätigbare oder selbsttätige oder automatisch öffnende und schließende Arretierungsvorrichtungen eingreifen zu lassen. Auf diese Weise kann ein Fahrzeug einfach in einen Fahrbereitschaftszustand versetzt werden.

Unter einem Möbelkorpus im Sinne der Erfindung ist ein Möbelkorpus mit Seitenwänden, einer Rückwand, einem Deckel und einem Boden sowie einer Front, beispielsweise als Klappe, Türe oder Vorhang beziehungsweise Rollladen zu verstehen.

Neben der beschriebenen linearen und diagonal ausgerichteten Bewegungskurve sind auch andere Bewegungskurven vorgesehen, beispielsweise in Form einer Schwenkbewegung, welche nach dem Prinzip eines Doppel-Schwenkhebels durch Drehbewegungen mit einem Radius um mindestens einen Drehpunkt erfolgt.

Zur weiteren Verdeutlichung der Erfindung ist im nachfolgenden Ausführungsbeispiel schematisch ein entsprechend absenkbarer Oberschrank gezeigt.

Es zeigen

| | |
|---|---|
| Figur 1 | eine schematische Draufsicht auf eine Küchenzeile in einem Camping- oder Freizeitfahrzeug, |
| Figur 2 | eine schematische Seitenansicht eines abgesenkten Oberschranks entsprechend Figur 1 und |
| Figur 3 | eine ausschnittsweise Darstellung eines abgesenkten Oberschranks mit zwei Schrankfächern. |

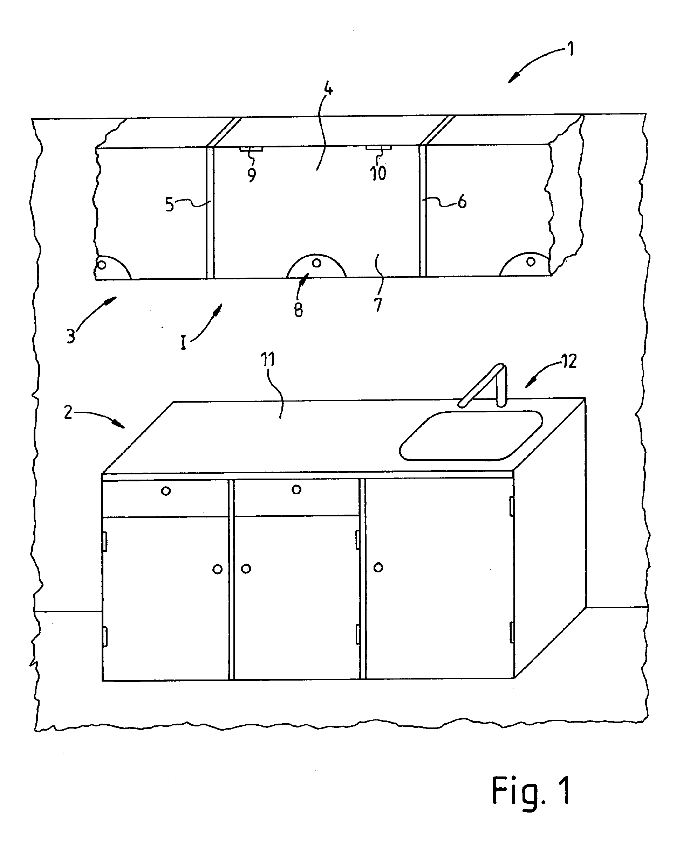

Im Einzelnen zeigt Figur 1 eine Küchenzeile 1 wie sie in einem Campingfahrzeug integriert sein kann. Die Küchenzeile 1 umfasst dabei einen Aufbau an Unterschränken 2 sowie eine Zeile von Oberschränken 3. Ein vorliegend in der Mitte angeordneter Oberschrank 4 ist als Schrankkorpus zwischen zwei Seitenwänden 5, 6 angeordnet. Der Oberschrank 4 umfasst dabei eine Front 7 mit einem Betätigungsmechanismus 8 zum Öffnen der Front 7, welche als Klappe an Scharnieren 9, 10 aufgehängt ist.

Die Unterschränke 2 weisen eine Arbeitsebene 11 auf, in welche rechtsseitig ein Waschbecken 12 integriert ist. Im Bereich vor den Unterschränken 2 kann nunmehr beispielsweise ein Rollstuhlfahrer zwar die unteren Schränke bedienen und etwas auf der Arbeitsfläche 11 ablegen, jedoch keinen Zugriff zu den Oberschränken 3, insbesondere zum Oberschrank 4 nehmen. Dies wäre nur möglich, wenn der Rollstuhlfahrer entweder aufsteht oder sich an entsprechenden Haltemitteln nach oben zieht.

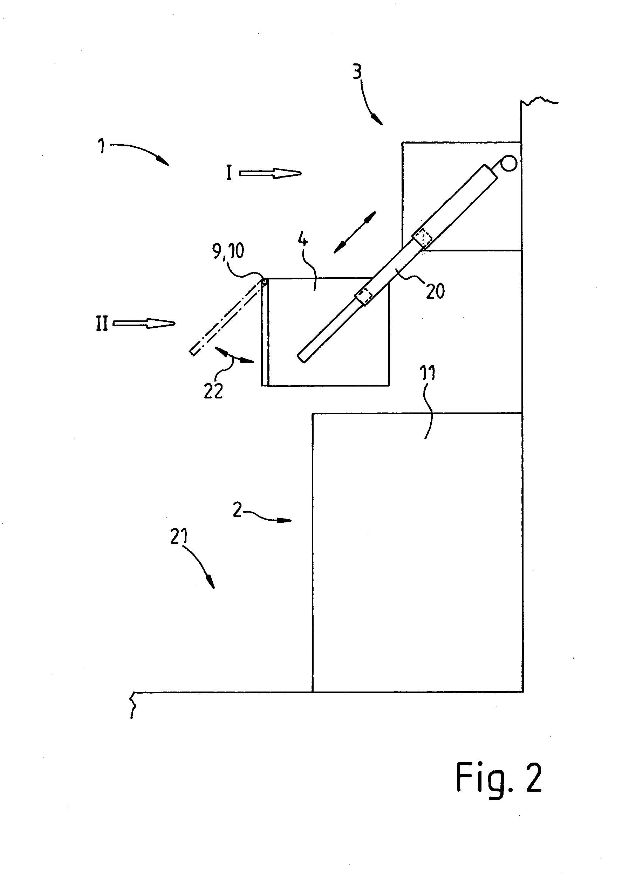

Figur 2 zeigt eine Seitenansicht des erfindungsgemäßen Oberschranks in einer abgesenkten zweiten Position. Die Darstellung ist dabei derartig schematisch gewählt, dass das Mittel zur Absenkung und anschließenden Anhebung des Oberschranks in Form eines teleskopierbaren Linearauszugs 20 vollständig dargestellt ist, indem entsprechende Teile der Seitenwände 5, 6 ausgeblendet sind.

Der Oberschrank 4 ist vorliegend von einer ersten oberen Position I (siehe Figur 1) in eine zweite untere Position II abgesenkt. Der Oberschrank 4 ist damit nahezu auf der Höhe der Arbeitsfläche 11 und dadurch zugänglich für einen im Bereich 21 vor den Unterschränken 2 im Rollstuhl befindliche Person. Die Front 7 kann nunmehr durch eine Schwenkbewegung 22 um das Scharnier 9, 10 geöffnet und der Inhalt einfach entnommen werden.

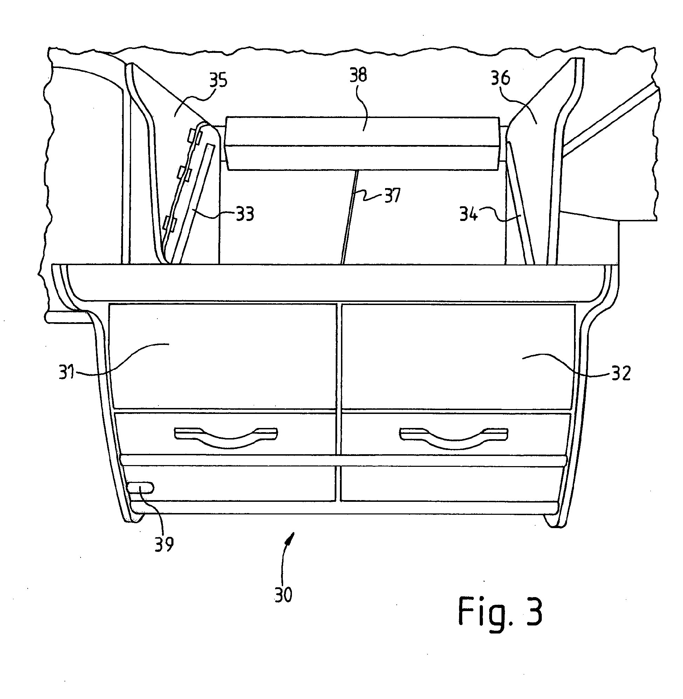

Figur 3 zeigt eine Darstellung eines absenkbaren Oberschranks 30 in Form eines Doppelschranks. In der Figur 3 weist dabei der Oberschrank 30 zwei klappbare Fronten 31, 32 auf. Der Oberschrank 30 ist über diagonal verlaufende teleskopierbare Linearführungen 33, 34 an zwei Seitenwänden 35, 36 aufgehängt. Ein automatisches Absenken und Anheben erfolgt über einen Seilzug 37, welcher mit einer vorliegend nicht dargestellten motorbetriebenen Seilwinde in einem Motorkasten 38 verbunden ist. der Oberschrank 30 wird durch den Seilzug 37 unter Einsatz des Motors im Motorkasten 38 angehoben und abgesenkt, je nachdem wie der Benutzer es verlangt.

Der Oberschrank 30 verfügt weiterhin über einen Schließzylinder 39, welcher als Arretierung des Oberschranks in einer ersten oberen Position beispielsweise beim Transport dient. Selbstverständlich kann der Schließzylinder auch durch elektro-mechanisch betätigte Schließvorrichtungen ersetzt werden, sodass ein Arretieren und Sichern des Oberschranks in der ersten oberen Position auch automatisch und insbesondere auch abhängig vom Fahrzeugszustand erfolgen kann.

**Bezugszeichenliste:**

| | |
|---|---|
| 1 | Küchenzeile |
| 2 | Unterschränke |
| 3 | Oberschränke |
| 4 | Oberschrank |
| 5 | Seitenwand |
| 6 | Seitenwand |
| 7 | Front |
| 8 | Betätigungsmechanismus |
| 9 | Scharnier |
| 10 | Scharnier |
| 11 | Arbeitsebene |
| 12 | Waschbecken |
| 20 | teleskopierbarer Linearauszug |
| 21 | Bereich |
| 22 | Schwenkbewegung |
| 30 | Oberschrank |
| 31 | Front |
| 32 | Front |
| 33 | teleskopierbare Linearführung |
| 34 | teleskopierbare Linearführung |
| 35 | Seitenwand |
| 36 | Seitenwand |
| 37 | Seilzug |
| 38 | Motorkasten |
| 39 | Schließzylinder |

## Patentansprüche

1. Campingfahrzeug-Einbaumöbel für Camping- oder Freizeitfahrzeuge, wobei das Einbaumöbel als Oberschrank ausgebildet ist und einen Möbelkorpus sowie Befestigungsmittel des Möbelkorpus an einer Wand eines Camping- oder Freizeitfahrzeugs oder an einem benachbarten Möbelkorpus umfasst, **dadurch gekennzeichnet, dass** Mittel zur Absenkung und anschließenden Anhebung des Oberschranks von einer ersten oberen Position (I) in eine zweite untere Position (II) vorgesehen sind.

2. Einbaumöbel nach Anspruch 1, **dadurch gekennzeichnet, dass** die erste obere Position (I) als Transportposition und die zweite untere Position (II) als Zugriffsposition ausgebildet ist, wobei insbesondere in der ersten oberen Transportposition (I) Mittel zur Arretierung und Sicherung des Einbaumöbels während des Transports vorgesehen sind.

3. Einbaumöbel nach Anspruch 1 oder 2, **dadurch gekennzeichnet, dass** eine Bewegungskurve des Einbaumöbels von der oberen ersten Position (I) zur zweiten unteren Position (II) als ausschließlich diagonale Linearbewegung ausgebildet ist.

4. Einbaumöbel nach einem der vorangegangenen Ansprüche, **dadurch gekennzeichnet, dass** eine Bewegungskurve von der oberen ersten Position (I) zur zweiten unteren Position (II) als Schwenkbewegung ausgebildet ist.

5. Einbaumöbel nach einem der vorangegangenen Ansprüche, **dadurch gekennzeichnet, dass** die Mittel zur Absenkung durch Linearauszüge, insbesondere teleskopierbare Linearauszüge gebildet sind.

6. Einbaumöbel nach einem der vorangegangenen Ansprüche, **dadurch gekennzeichnet, dass** mindestens ein Antrieb zur automatischen Absenkung und Anhebung des Oberschrankes ausgebildet ist.

7. Einbaumöbel nach Anspruch 6, **dadurch gekennzeichnet, dass** der Antrieb als Seilzug mit Seilwinde, vorzugsweise unter Einsatz einer Umlenkung ausgebildet ist.

8. Einbaumöbel nach Anspruch 6, **dadurch gekennzeichnet, dass** der Antrieb als Gasdruckfeder oder als Linearmotor oder als Zahnstangenantrieb, vorzugsweise unter Einsatz einer Umlenkung ausgebildet ist.

9. Einbaumöbel nach einem der vorangegangenen Ansprüche, **dadurch gekennzeichnet, dass** ein Innenbereich des Einbaumöbels ausfahrbar, insbesondere teleskopierbar ist.

10. Einbaumöbel nach einem der vorangegangenen Ansprüche, **dadurch gekennzeichnet, dass** eine elektronische Positionsüberwachung und/oder eine automatische Positionseinnahme, beispielsweise bei Betätigung einer Rückstellfunktion oder bei Herstellung einer Fahrbereitschaft des Fahrzeugs vorgesehen ist.
